# EUROPÄISCHE PATENTSCHRIFT

(11) **EP 3 640 413 B1**
(45) Veröffentlichungstag und Bekanntmachung des Hinweises auf die Patenterteilung: **02.08.2023**
(21) Anmeldenummer: 19203527.7
(22) Anmeldetag: 16.10.2019
(51) Int. Cl.: E04G 23/00

(54) **FRÄSWALZE, FLÄCHENFRÄSE UND VERFAHREN ZUR ENTFERNUNG VON VERKLEBTEN BODENBELÄGEN**
MILLING ROLLER, SURFACE MILLING CUTTER AND METHOD FOR REMOVING GLUED FLOOR COVERINGS
ROULEAU FRAISEUR, FRAISEUSE DE SURFACE ET PROCÉDÉ D'ÉLIMINATION DES REVÊTEMENTS DE SOL COLLÉS

(30) Priorität: 19.10.2018 DE 102018217939
(43) Veröffentlichungstag der Anmeldung: 22.04.2020
(73) Patentinhaber: Wolff GmbH & Co. KG, 74360 Ilsfeld (DE)
(72) Erfinder: HEINZ, Daniel, 74360 Ilsfeld (DE)
(74) Vertreter: Isarpatent

(56) Entgegenhaltungen:
- DE-A1-102009 005 634
- US-A- 1 282 285
- US-A- 2 576 607
- US-A- 6 116 305
- US-A1- 2010 074 705
- US-A1- 2015 375 417
- US-B1- 7 959 099
- US-B2- 7 357 604

## Beschreibung

### GEBIET DER ERFINDUNG

Die vorliegende Erfindung betrifft eine Fräswalze zur Entfernung von verklebten Bodenbelägen sowie eine Flächenfräse mit einer derartigen Fräswalze und ein Verfahren zur Entfernung von verklebten Bodenbelägen mit einer derartigen Fräswalze.

### TECHNISCHER HINTERGRUND

Zur Bodenbearbeitung von Parkettböden existieren unterschiedlichste Bearbeitungsarten. Zur sogenannten Bodenaufbereitung werden beispielsweise oftmals Poliermaschinen eingesetzt. Eine weitere Bearbeitungsart stellt die Bodensanierung dar, wozu oftmals Fräs- oder Schleifmaschinen eingesetzt werden, um einen Teil der obersten Parkettschicht abzutragen. Eine Eindringtiefe in das Parkett ist dabei nur gering, d. h. in der Regel kleiner als 2 mm, vorgesehen.

Daneben existiert die sogenannte Bodenentfernung als weitere Bearbeitungsart. Hierzu muss der Bodenbelag vollständig entfernt werden. Dies ist vor allem bei verklebten Mehrschichtparkettböden bislang erschwert, denn moderne Parkettklebestoffe weisen über ihre Lebensdauer hinweg eine hohe Flexibilität auf. Somit wird ein hoher Kraft- und Zeitaufwand zur Entfernung derartiger Böden benötigt. Häufig ist ein Einsägen der Paneele erforderlich, beispielsweise mit einer Handkreissäge. Erst im Anschluss daran kann der Bodenbelag mit einem sogenannten Bodenstripper, wie er von der Anmelderin selbst vertrieben wird, d. h. einer maschinenangetriebenen Schlagklinge, die seitlich an den Paneelen im Bereich des Klebstoffs angesetzt wird, partiell entfernt werden. Insbesondere bei Mehrschichtparkettböden bleiben dabei jedoch aufgrund der hohen Flexibilität des Klebstoffes, welcher die Schlagenergie zum Teil absorbieren kann, oftmals Reste der Trägerschicht der Paneele an dem Boden haften. Die Reste des meist aus mitteldichten oder hochdichten Faserplatten bestehenden Trägers müssen dann in Nacharbeit entfernt werden.

Im Stand der Technik ist eine Fräswalze mit verteilt auf der Mantelfläche angeordneten Schneidplatten aus der DE 10 2009 005634 A1 bekannt.

### ZUSAMMENFASSUNG DER ERFINDUNG

Vor diesem Hintergrund liegt der vorliegenden Erfindung die Aufgabe zugrunde, ein verbessertes Werkzeug und eine verbesserte Maschine sowie ein verbessertes Verfahren zur Entfernung von verklebten Bodenbelägen, insbesondere Parkettbodenbelägen anzugeben.

Erfindungsgemäß wird diese Aufgabe durch eine Fräswalze mit den Merkmalen des Patentanspruchs 1 und/oder durch eine Flächenfräse mit den Merkmalen des Patentanspruchs 8 und/oder durch ein Verfahren mit den Merkmalen des Patentanspruchs 13 gelöst.

Demgemäß ist vorgesehen:
- Eine Fräswalze gemäß Anspruch 1 zur Entfernung von verklebten Bodenbelägen, insbesondere Holzbodenbelägen, vorzugsweise Parkettbodenbelägen, besonders bevorzugt Mehrschichtparkett, mit einer vorbestimmten Fräsbreite, welche die Breite eines mit einer Überfahrt der Fräswalze bearbeitbaren Bodenflächenabschnitts vorgibt, mit einer Vielzahl von zumindest im Wesentlichen tangential an der Fräswalze angeordneten Schneidplatten, die an der Fräswalze verteilt angeordnet sind, so dass bei einer vollständigen Umdrehung der Fräswalze die gesamte Fräsbreite mit zumindest einer Schneidplatte bearbeitbar ist und eine mit dem zu bearbeitenden Bodenflächenabschnitt gleichzeitig kontaktierbare gemeinsame Breite der Schneidplatten stets kleiner als die Fräsbreite ist.
- Eine Flächenfräse gemäß Anspruch 8 zur Entfernung von verklebten Bodenbelägen, insbesondere Parkettfräse zur Entfernung von verklebten Parkettbodenbelägen, mit einem Antriebsmotor, und mit einer durch den Antriebsmotor antreibbaren erfindungsgemäßen Fräswalze.
- Verfahren gemäß Anspruch 13 zur Entfernung eines verklebten Bodenbelags, insbesondere mit einer erfindungsgemäßen Flächenfräse, mit den Schritten: Antreiben einer erfindungsgemäßen Fräswalze, die eine Mehrzahl um den Umfang der Fräswalze verteilter zumindest im Wesentlichen tangential orientierter Schneidplatten aufweist, welche jeweils eine im Vergleich zu einer Fräsbreite der Fräswalze geringere Breite aufweisen, mit einer vorbestimmten Antriebsleistung; Kontaktieren der Fräswalze mit dem Bodenbelag; und Einstellen einer den Bodenbelag durchdringenden Frästiefe und einer Fräsgeschwindigkeit derart, dass eine Zerspanungsleistung kleiner oder gleich der vorbestimmten Antriebsleistung ist.

Die der vorliegenden Erfindung zugrunde liegende Erkenntnis besteht darin, dass eine Fräsbearbeitung die Bodenentfernung in einem einzigen Schritt ermöglichen und somit stark erleichtern kann. Jedoch ist die mit haushaltsüblicher Netzspannung verfügbare Antriebsleistung zur Entfernung verklebter Parkettböden mit der Anmelderin bisher bekannten Werkzeugen wegen der dazu benötigten Eindringtiefe nicht ausreichend. Es wären also ein sehr viel stärkerer Antrieb und dazu ein Starkstromanschluss nötig, der aber an vielen Orten nicht ohne weiteres verfügbar ist.

Die der Erfindung zugrunde liegende Idee besteht nun darin, eine Fräswalze, auch als Messerwelle bezeichnet, neuartig zu gestalten, indem eine Vielzahl von Schneidplatten an der Fräswälze verteilt in tangentialer Ausrichtung angeordnet sind, derart, dass eine Bearbeitung eines Bodenflächenabschnitts über die gesamte Fräsbreite ermöglicht ist, jedoch die Schneidplatten stets nur zum Teil, d. h. nicht über die gesamte Fräsbreite, mit dem Bodenflächenabschnitt in Eingriff stehen. Entsprechen ist die mit dem zu bearbeitenden Bodenflächenabschnitt gleichzeitig kontaktierbare gemeinsame Breite der Schneidplatten stets kleiner als die Fräsbreite. Die Ausrichtung der Schneidplatten ist dabei zumindest im Wesentlichen tangential vorgesehen, d.h. in jedem Fall kleiner als 10°, beispielsweise im Rahmen der Fertigungstoleranz, von einer exakt tangentialen Ausrichtung abweichend. Eine exakte tangentiale Ausrichtung, d.h. mit einem rechten Winkel einer Flächennormalen der Schneidplatte zur Umfangsfläche der Fräswalze, ist selbstverständlich möglich.

Durch die tangentiale Ausrichtung der Schneidplatten ist ein im Vergleich zu einer radialen Ausrichtung steilerer Keilwinkel der Schneidkante der Schneidplatten realisierbar, sodass die Schneidplatten den Bodenbelag leichter bzw. mit weniger Zerspanleistung trennen können. Ferner wird erfindungsgemäß stets nur für die Zerspanungsleistung des aktuell mit dem Bodenflächenabschnitt in Eingriff stehenden Teils der Schneidplatten die Antriebsleistung benötigt. Diese Kombination senkt insgesamt die zur Entfernung von verklebten Bodenbelägen benötigte Zerspanleistung und damit auch die benötigte Antriebsleistung. Auf diese Weise wird erfindungsgemäß der Einsatz einer Fräswalze zur Entfernung von verklebten Bodenbelägen, insbesondere Holzbodenbelägen, vorzugsweise alle Arten von Parkettbodenbelägen, besonders auch Mehrschichtparkett, mit herkömmlicher Haushalts-Netzspannung mit der zugehörigen maximal zulässigen Stromstärke, beispielsweise in Europa von 230 V und 16 A, ermöglicht. Somit ist auch mit einer Stromversorgung über eine Haushaltssteckdose eine Entfernung der gesamten Dicke des Bodenbelags in einem einzigen Schritt des Fräsens möglich.

Die Eindringtiefe bzw. Frästiefe und die Fräsgeschwindigkeit können erfindungsgemäß so eingestellt werden, dass die elektrische Leistungsaufnahme einer Flächenfräse unterhalb der bei Netzspannung zulässigen maximalen Leistung, beispielsweise in Europa 3680 W, bleibt. Bevorzugt wird die Frästiefe entsprechend der zu erwartenden Bodenbelagsdicke eingestellt und die Fräsgeschwindigkeit daran angepasst, so dass diese elektrische Leistungsaufnahme nicht überschritten wird.

Die mit der erfindungsgemäßen Fräswalze geringere benötigte Zerspanleistung senkt zudem die Belastung der Schneiden der Schneidplatten und erhöht somit deren Standzeit. Ferner erlaubt die erfindungsgemäße Anordnung der Schneidplatten erst die für verklebte Parkettböden zur Bodenbelagsentfernung mit Netzspannung benötigte Eindringtiefe.

Bei höherer Eindringtiefe kann jede Schneidplatte einen größeren Winkelsektor des Umfangs der Fräswalze abdecken, sodass eine größere Beabstandung der Schneidplatten in Umfangsrichtung ermöglicht ist. Auf diese Weise werden erfindungsgemäß auch weniger Schneidplatten zur Abdeckung des gesamten Umfangs und der gesamten Fräsbreite benötigt. Somit werden der Materialeinsatz und der Wartungsaufwand für die Schneidplatten reduziert.

Die erfindungsgemäße Flächenfräse erreicht auf diese Weise einen großen Zerspanungsquerschnitt, trotz einer begrenzt zur Verfügung stehenden elektrischen Antriebsleistung. Vorteilhafte Ausgestaltungen und Weiterbildungen ergeben sich aus den weiteren Unteransprüchen sowie aus der Beschreibung unter Bezugnahme auf die Figuren der Zeichnung.

Erfindungsgemäß sind die Schneidplatten in Umfangsrichtung voneinander beabstandet, so dass mit dem zu bearbeitenden Bodenflächenabschnitt stets nur eine Schneidplatte gleichzeitig kontaktierbar ist. Auf diese Weise ist sichergestellt, dass stets nur die Zerspanleistung für eine einzige Schneidplatte gleichzeitig aufgebracht werden muss und somit keine höhere Antriebsleistung als für diese eine Schneidplatte benötigt wird.

Erfindungsgemäß ist ein axialer Versatz zwischen benachbarten Schneidplatten, insbesondere Wendeschneidplatten, vorgesehen. Erfindungsgemäß ist eine Staffelung der Schneidplatten in zwei Reihen über den Umfang der Fräswalze verteilt vorgesehen Entsprechend ist mit einem Versatz um eine Schneidplattenbreite eine zweite Reihe vorgesehen, welche die Bereiche der Lücken zwischen den Schneidplatten der ersten Reihe bei einer ganzen Umdrehung der Fräswalze bearbeitet.

Erfindungsgemäß sind die Schneidplatten axial und radial gleichmäßig an einer gemeinsamen Mantelfläche der Fräswalze verteilt angeordnet, sodass bei einer vollständigen Umdrehung die gesamte Fräsbreite gleichmäßig bearbeitbar ist. Entsprechend wird bei einer ganzen Umdrehung der Bodenflächenabschnitt über die gesamte Fräsbreite von jeweils einer Schneidplatte bearbeitet. Insbesondere können die Schneidplatten an der Mantelfläche angebracht sein. Dazu kann für jede Schneidplatte eine Montagevertiefung in der Mantelfläche vorgesehen sein. Alternativ oder zusätzlich kann für jede Schneidplatte eine Spanaufnahmevertiefung in der Mantelfläche vorgesehen sein, sodass Verklemmungen oder ein Ausheben der Fräswalze vermieden werden.

Gemäß einer Ausführungsform handelt es sich um eine zweireihige spiralförmige Anordnung der Schneidplatten.

Auf diese Weise sind die Schneidplatten problemlos voneinander beabstandet positionierbar, was die Montage und Wartung erleichtert.

Gemäß einer Ausführungsform sind die Schneidplatten als Wendeschneidplatten ausgebildet. Insbesondere handelt es sich um Hartmetallwendeschneidplatten. Auf diese Weise ist, wenn die Standzeit einer Schneide abgelaufen ist, nicht jedes Mal eine neue Montage der Schneidplatten notwendig. Stattdessen können Schneidplatten zumindest einmal gewendet werden, sodass eine frische Schneide zum Einsatz kommt. Eine Wendeschneidplatte weist zumindest zwei Schneiden auf. Denkbar sind auch dreieckige Wendeschneidplatten mit drei Schneiden. Insbesondere sind quadratische Wendeschneidplatten mit vier Schneiden vorgesehen.

Gemäß einer Ausführungsform sind die Schneidplatten unabhängig voneinander an der Fräswalze, insbesondere an der Mantelfläche der Fräswalze, befestigbar. Auf diese Weise können einzelne Schneidplatten unabhängig voneinander ausgetauscht werden. Ferner ist auf diese Weise eine direkte Anbindung der Schneidplatten an die Mantelfläche ermöglicht.

Gemäß einer Ausführungsform liegt die Fräsbreite in einem Bereich von 100 mm bis 500 mm, insbesondere 100 mm bis 300 mm, vorzugsweise 150 mm bis 250 mm, beispielhaft 200 mm. Auf diese Weise ist eine zur großflächigen Bodenentfernung ausreichende Fräsbreite bereitgestellt.

Gemäß einer Ausführungsform liegt die Breite einer Schneidplatte im Bereich von 10 mm bis 50 mm. Insbesondere weist eine Schneidplatte eine Breite von 10 mm bis 30 mm auf. Ein bevorzugter Bereich der Breite der Schneidplatte liegt bei 15 mm bis 25 mm. In diesem Bereich ist ein Eindringen einer einzelnen tangential ausgerichteten Schneidplatte in einen Parkettbodenbelag bis in die zur Bodenentfernung benötigte Tiefe, beispielsweise bis zu 30 mm, insbesondere bis zu 25 mm, zumindest bis zu 20 mm mit einer Zerspanungsleistung ermöglicht, welche mit einem durch Netzspannung bzw. von der durch die Netzspannung vorgegebene Maximalleistung angetriebenen Motor erreichbar ist.

Gemäß einer Ausführungsform weisen die Schneidplatten der ersten und zweiten Reihe eine axiale Überlappung auf. Die Überlappung ist insbesondere geringer als eine halbe Breite einer Schneidplatte vorgesehen. Vorzugsweise beträgt die Überlappung weniger als ein Zehntel der Breite einer Schneidplatte. Beispielsweise ist Überlappung kleiner als 2 mm vorgesehen. Es handelt sich insbesondere um eine Betrachtung der Überlappung bei einer gesamten Umdrehung. Insbesondere kann die Überlappung auch zwischen Schneidplatten unterschiedlicher Reihen vorgesehen sein.

Gemäß einer Ausführungsform einer Flächenfräse weist der Antriebsmotor eine vorbestimmte Antriebsleistung auf, wobei die einzelnen Schneidplatten zur Abtrennung eines vorbestimmten Bodenbelags, insbesondere von Parkettboden, mit einer vorbestimmten maximalen Zerspanungsleistung ausgelegt sind, die unter der vorbestimmten Antriebsleistung liegt. Bei der vorbestimmten Antriebsleistung handelt es sich insbesondere um die bei Haushalts-Netzspannung maximal erreichbare mechanische Antriebsleistung. Diese kann beispielsweise im europäischen Raum, wo die maximal zulässige Aufnahmeleistung bei Netzspannung 3680 W beträgt, im Bereich kleiner oder gleich 3 kW liegen. Auf diese Weise ist ein funktionssicherer Betrieb der Flächenfräse bei Netzspannung ermöglicht.

Gemäß einer Ausführungsform weist die Flächenfräse eine vorbestimmte maximale Frästiefe auf. Die einzelnen Schneidplatten sind jeweils zur Abtrennung des vorbestimmten Bodenbelags bei maximaler Frästiefe mit der vorbestimmten maximalen Zerspanungsleistung ausgelegt. Somit ist ein zuverlässiger Betrieb der Flächenfräse bei maximaler Frästiefe sichergestellt.

Gemäß einer Ausführungsform liegt die vorbestimmte maximale Frästiefe in einem Bereich von 3 mm bis 30 mm. Insbesondere kann der Bereich bei 5 mm bis 30 mm, vorzugsweise 10 mm bis 30 mm oder auch 15 mm bis 30 mm liegen. Besonders bevorzugt sind Bereiche von 15 mm bis 25 mm, beispielsweise 20 mm. Insbesondere ist die tatsächliche Frästiefe in dem durch die maximale Frästiefe begrenzten Bereich frei einstellbar. Auf diese Weise ist eine vollständige Entfernung auch dicker verklebter Bodenbeläge ermöglicht.

Gemäß einer bevorzugten Ausführungsform ist die vorbestimmte Antriebsleistung geringer als eine bei Netzspannung maximal zulässige Aufnahmeleistung, insbesondere von 3680 W, vorgesehen. Insbesondere ist die mechanische Antriebsleistung abhängig von der Verlustleistung des Motors derart vorgesehen, dass die elektrische Aufnahmeleistung kleiner oder gleich der bei Netzspannung maximal zulässigen Leistung, insbesondere 3680 W, liegt. Insbesondere kann die mechanische Antriebsleistung in einem Bereich von 2,5 bis 3 KW liegen, beispielsweise bei 2,6 KW liegen.

Die obigen Ausgestaltungen und Weiterbildungen lassen sich, sofern sinnvoll, und im Rahmen der beigefügten Ansprüche, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen, wobei die Erfindung allein durch die beigefügten Ansprüche definiert wird.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Vorderansicht einer Fräswalze;
- Fig. 2: eine Seitenansicht einer Fräswalze;
- Fig. 3: eine Längsschnittansicht einer Fräswalze;
- Fig. 4: eine perspektivische Ansicht einer Fräswalze;
- Fig. 5: eine Detailansicht eines Mantelflächenabschnitts der Fräswalze nach Fig. 2;
- Fig. 6: eine perspektivische Seitenansicht einer Flächenfräse;
- Fig. 7: eine perspektivische Vorderansicht einer Flächenfräse;
- Fig. 8: eine perspektivische Rückansicht einer Flächenfräse;
- Fig. 9: eine perspektivische Seitenansicht der Flächenfräse nach Fig. 8 ohne Schutzabdeckung;
- Fig. 10: ein schematisches Funktionsschaubild einer Flächenfräse;
- Fig. 11A: eine Vorderansicht einer Flächenfräse in Betriebsstellung; und
- Fig. 11B: eine Vorderansicht einer Flächenfräse in Ruhestellung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

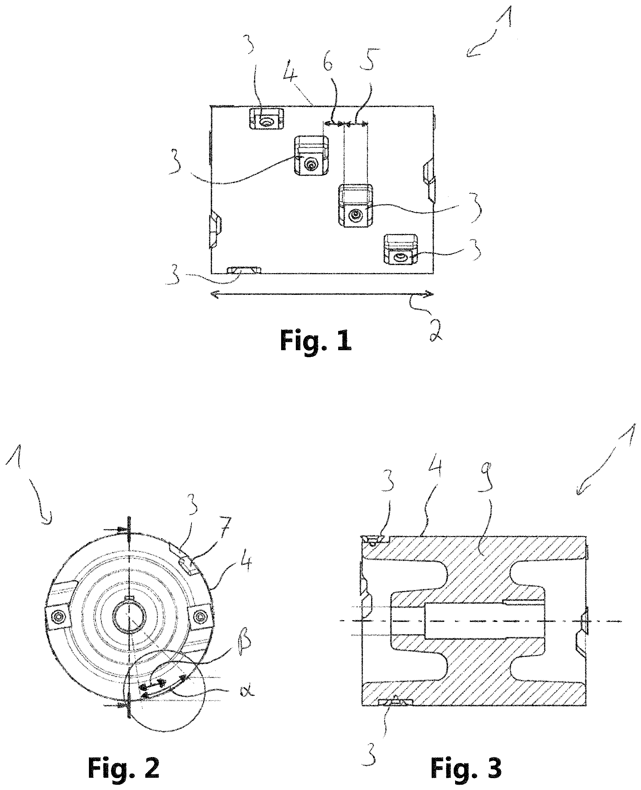

Fig. 1 zeigt eine Vorderansicht einer Fräswalze 1.

Die Fräswalze 1 ist zur Entfernung von verklebten Parkettbodenbelägen, insbesondere auch Mehrschichtparkett, ausgelegt. Sie weist eine vorbestimmte Fräsbreite 2 auf, welche die Breite eines mit einer Überfahrt der Fräswalze 1 bearbeitbaren Bodenflächenabschnitts definiert. Zum Abtragen des Bodenbelags sind eine Vielzahl von tangential an der Fräswalze angeordneten Schneidplatten 3 vorgesehen, die an der Fräswalze 1 verteilt angeordnet sind.

Die Schneidplatten 3 sind axial und radial gleichmäßig an einer gemeinsamen Mantelfläche 4 der Fräswalze verteilt angeordnet, sodass bei einer vollständigen Umdrehung die gesamte Fräsbreite 2 gleichmäßig bearbeitbar ist. Bei einer vollständigen Umdrehung der Fräswalze 1 ist somit die gesamte Fräsbreite 2 mit zumindest einer Schneidplatte 3 bearbeitbar, welche jeweils deutlich schmaler als die Fräsbreite ausgebildet sind. Beispielsweise kann bei einer Fräsbreite 2 von beispielhaft 200 mm die Breite 5 einer Schneidplatte 3 beispielhaft 21 mm betragen. Selbstverständlich sind bei weiteren Ausführungsformen Abweichungen möglich.

Die Schneidplatten 3 sind hier beispielhaft spiralförmig an der Mantelfläche 4 verteilt angeordnet. Die axiale Verteilung ist dabei derart vorgesehen, dass zwischen zwei benachbarten Schneidplatten in axialer Richtung eine Lücke 6 vorgesehen ist. Es handelt sich daher um eine doppelspiralförmige Verteilung mit einem axialen Versatz um etwa eine Schneidplattenbreite. Daher ist eine hier weitgehend verdeckte zweite Reihe von Schneidplatten vorgesehen, welche die Bereiche der Lücken 6 zwischen den Schneidplatten 3 der ersten Reihe bei einer ganzen Umdrehung der Fräswalze 1 bearbeitet.

Bei weiteren Ausführungsformen sind selbstverständlich auch andere Formen der Verteilung möglich. Die Verteilung der Schneidplatten führt jedoch stets zu einer im Vergleich zu der Fräsbreite deutlich kleineren gesamten Eingriffsbreite der Schneidplatten 3 mit dem Bodenbelag. Mit anderen Worten ist eine mit dem zu bearbeitenden Bodenflächenabschnitt gleichzeitig kontaktierbare gemeinsame Breite der Schneidplatten 3 stets kleiner als die Fräsbreite 2.

Fig. 2 zeigt eine Seitenansicht einer Fräswalze 1.

In der Seitenansicht ist ein Winkelabschnitt α eingezeichnet, welcher eine Beabstandung der Schneiden der Schneidplatten 3 voneinander in Umfangsrichtung bezeichnet. Ein freier Abstand β der Schneidplatten 3 in Umfangsrichtung voneinander ist dabei größer als die Breite einer Schneidplatte 3 vorgesehen.

Die Schneidplatten 3 sind hier als sogenannte Wendeschneidplatten, d. h. mit Schneiden an mehreren Seiten, ausgebildet. Beispielhaft sind die Wendeschneidplatten hier quadratisch mit vier gleichen Schneiden ausgebildet. Dementsprechend ist der freie Abstand β zwischen benachbarten Wendeschneidplatten von einer hinteren Schneide einer vorderen Wendeschneidplatte zu einer vorderen Schneide einer hinteren Wendeschneidplatte größer als die Breite einer Wendeschneidplatte bemessen. Auf diese Weise wird erreicht, dass ein zu bearbeitender Bodenflächenabschnitt stets nur mit einer einzigen Schneidplatte 3 gleichzeitig kontaktierbar ist. Daneben dient der freie Abstand β in Umfangsrichtung auch als Bauraum für eine Spanaufnahmevertiefung 7 in der Mantelfläche 4.

Fig. 3 zeigt eine Längsschnittansicht einer Fräswalze 1.

Wie in dieser Schnittansicht zu erkennen handelt es sich bei der Mantelfläche 4 um die Außenfläche eines gemeinsamen Walzenkörpers 9.

An der dargestellten oberen Seite der Mantelfläche 4 ist eine Schneidplatte 3 einer ersten Reihe und an der unteren Seite eine Schneidplatte 3 einer zweiten Reihe vorgesehen. Die Schneidplatten 3 weisen untereinander eine geringfügige axiale Überlappung auf, welche insbesondere kleiner als 2 mm, hier beispielhaft mit 1 mm, vorgesehen ist. Dies ist für alle weiteren Schneidplatten 3 der beiden Reihen gleichermaßen vorgesehen. Somit wird die Abdeckung der gesamten Fräsbreite 2 gewährleistet.

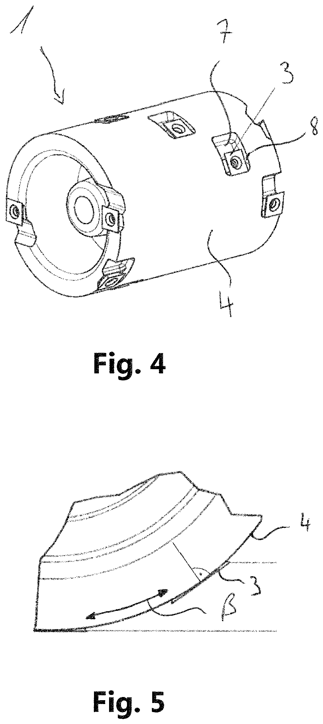

Fig. 4 zeigt eine perspektivische Ansicht einer Fräswalze 1.

In dieser Darstellung ist die Anbringung der als Wendeschneidplatten ausgebildeten Schneidplatten 3 in an die Spanaufnahmevertiefung 7 direkt anschließende Montageausnehmungen 8 der Mantelfläche 4 gut zu erkennen. Die Schneidplatten 3 sind dementsprechend unabhängig voneinander an der Fräswalze 1 befestigbar. Jede Wendeschneidplatte ist in ihrer Montageausnehmung 8 an der Mantelfläche 4 mit einem eigenen Befestigungsmittel, beispielsweise einer Schraube, in dem Walzenkörper der Fräswalze 1 befestigt. Durch Lösen der Schraube kann jede der Wendeschneidplatten gedreht und durch Anziehen der Schraube wieder fixiert werden. Eine Kante der Montageausnehmung 8 kann die Schneidplatte 3 dabei seitlich abstützen und als Verdrehsicherung dienen.

Fig. 5 zeigt eine Detailansicht eines Mantelflächenabschnitts der Fräswalze 1 nach Fig. 2.

Aus dieser Detailansicht geht hervor, dass die Schneidplatten 3 tangential an der Mantelfläche 4 ausgerichtet sind. Selbstverständlich sind aber auch geringfügige Abweichungen, insbesondere etwaige fertigungsbedingte Abweichungen, von einer exakten tangentialen Ausrichtung möglich, beispielsweise im Bereich +/- 10°.

Nicht erfindungsgemäß ist auch ein gewisser radialer Versatz der Schneidplatte 3 zur Umfangsfläche möglich bzw. einstellbar. Auf diese Weise kann eine Spanstärke des abgetrennten Materials eingestellt werden.

Erkennbar stehen die Schneiden der Schneidplatten 3 vor die Mantelfläche 4 vor, sodass sie bei Eingriff in das Material eines Bodenbelags einen Span abtrennen. Zwischen den benachbarten Schneiden ist im Bereich des freien Abstandes β dazu jeweils die hier verdeckte Spanaufnahmevertiefung 7 angeordnet, um den abgetrennten Span aufzunehmen.

Dementsprechend greifen die Schneiden bei Rotation der mit der Mantelfläche 4 auf einem zu entfernenden Bodenbelag laufenden Fräswalze 1 in das Bodenbelagsmaterial ein und arbeiten dieses sukzessive spanend ab, wobei die Späne jeweils in die Spanaufnahmevertiefung 7 geschoben werden. Die aufgenommenen Späne können im Verlauf einer vollen Umdrehung wieder aus der Spanaufnahmevertiefung herausfallen oder mit Hilfe einer Absaugung abgesaugt werden.

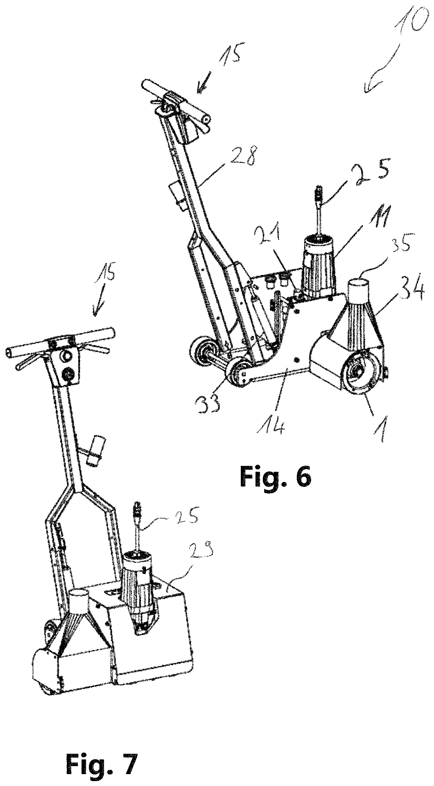

Fig. 6 zeigt eine perspektivische Seitenansicht einer Flächenfräse 10.

Die Flächenfräse 10 ist zur Entfernung von verklebten Parkettbodenbelägen ausgelegt und dementsprechend als Parkettfräse ausgebildet. Sie weist neben der mit einer Absaughaube 34 abgedeckten Fräswalze 1 einen mit einer Betätigungseinheit 15 ansteuerbaren Antriebsmotor 11 zum Antrieb der Fräswalze 1 auf. Die Betätigungseinheit 15 ist als Doppelhandgriff mit Zweifachschalter ausgebildet und an einem schwenkbar mit einer Strukturbasis 14 der Flächenfräse 1 gekoppelten Stiel 28 angebracht. Zur Höheneinstellung der Position der Betätigungseinheit 15 ist der Stiel 28 zusätzlich mit einer stufenlos einstellbaren und arretierbaren Blockierfeder 33 an der Strukturbasis 14 angelenkt.

Der Antriebsmotor 11 weist eine Stromversorgung 25 auf, die über eine zur besseren Übersichtlichkeit nicht dargestellte Steckerverbindung zur Kopplung mit einer Haushaltssteckdose vorgesehen ist. Entsprechend weist der Antriebsmotor 11 eine vorbestimmte Antriebsleistung auf, welche durch die bei Netzspannung maximal zulässige elektrische Aufnahmeleistung begrenzt ist. Bei europäischer Netzspannung von 230 V und maximal zulässiger Stromstärke von 16 A beträgt diese maximal zulässige elektrische Aufnahmeleistung beispielsweise 3680 W. Selbstverständlich sind je nach Region bei anderen Netzspannungen entsprechend andere maximal zulässige elektrische Aufnahmeleistungen vorgesehen, beispielsweise 4400 W bei 110 V und 40 A, und die vorbestimmte Antriebsleistung entsprechend anpassbar.

Entsprechend sind die einzelnen Schneidplatten 3 zur Abtrennung des vorbestimmten Bodenbelags, hier von Parkettboden, mit einer vorbestimmten maximalen Zerspanungsleistung ausgelegt, die unter der vorbestimmten Antriebsleistung liegt jedoch zu der für die Belagsentfernung benötigten Frästiefe ausreicht. Da die elektrische Umwandlung stets verlustbehaftet ist und eine gewisse Sicherheit vorgesehen werden sollte, liegt eine vorbestimmte Antriebsleistung in der Regel kleiner oder gleich 3 kW, beispielsweise 2,6 kW bei 6500 U/Min.

Die Flächenfräse 10 weist eine vorbestimmte maximale Frästiefe, beispielsweise von bis zu 30 mm, auf und die einzelnen Schneidplatten 3 sind jeweils zur Abtrennung des vorbestimmten Bodenbelags bei maximaler Frästiefe mit der vorbestimmten maximalen Zerspanungsleistung ausgelegt. Eine tatsächliche Frästiefe ist jedoch zwischen Null und der maximalen Frästiefe mit einer Einstelleinrichtung 21 einstellbar. Die maximale Frästiefe kann selbstverständlich bei weiteren Ausführungsformen abhängig von einer Breite der Schneidplatten und einer Fräsgeschwindigkeit unterschiedlich ausgelegt sein. Daran angepasst ist auch eine mit der radialen Schneidplattenposition beeinflussbare Spandicke bemessen.

Die abgetrennten Späne können durch die Absaughaube 34 über einen Sauganschluss 35, beispielsweise mit einem 70 mm Saugschlauch, abgesaugt werden.

Fig. 7 zeigt eine perspektivische Vorderansicht einer Flächenfräse 10.

Es handelt sich dabei um die Flächenfräse 10 nach Fig. 6, wobei zur Gewährleistung der Funktions- und Arbeitssicherheit nun eine Schutzabdeckung 29 im Bereich des Antriebsstrangs vorgesehen ist.

Dementsprechend ist mit einer derartigen Flächenfräse 10 ein Verfahren zur Entfernung eines Bodenbelags durchführbar, wozu die Fräswalze 10 zunächst mit einer vorbestimmten Antriebsleistung angetrieben wird. Anschließend wird die Fräswalze mit dem Bodenbelag 12 kontaktiert. Zudem wird eine den Bodenbelag durchdringende Frästiefe 13 und eine Fräsgeschwindigkeit derart eingestellt, dass eine Zerspanungsleistung kleiner oder gleich der vorbestimmten Antriebsleistung ist.

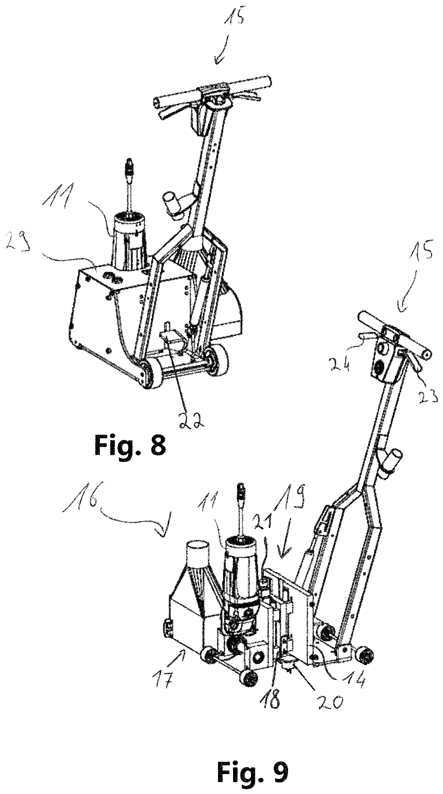

Fig. 8 zeigt eine perspektivische Rückansicht einer Flächenfräse 10.

Die Flächenfräse 10 ist ebenfalls zur Entfernung von verklebten Parkettbodenbelägen ausgelegt bzw. als Parkettfräse ausgebildet. Sie weist ferner ebenfalls eine Basisstruktur 14 sowie eine Betätigungseinheit 15 auf.

Fig. 9 zeigt eine perspektivische Ansicht der Flächenfräse 10 nach Fig. 8 ohne Schutzabdeckung.

Wie aus Fig. 9 ersichtlich ist hier eine an der Basisstruktur 14 linear in Höhenrichtung verstellbar gelagerte Werkzeugeinheit 16 vorgesehen. Die Werkzeugeinheit 16 umfasst sowohl den mit der Betätigungseinheit 15 ansteuerbaren Antriebsmotor 11 als auch ein damit angetriebenes Fräswerkzeug 17.

Bei dem Fräswerkzeug handelt es sich um die Fräswalze 1.

Die verstellbare Lagerung der Werkzeugeinheit 16 dient der Verstellung zwischen einer angehobenen Ruhestellung, in welcher das Fräswerkzeug 17 mit einem Bodenbelag außer Eingriff steht, und einer abgesenkten Betriebsstellung, in welcher das Fräswerkzeug 17 mit dem Bodenbelag in Eingriff steht.

Zur mechanischen Umsetzung der Verstellung ist eine Abhebevorrichtung 19 vorgesehen. Diese ist dazu eingerichtet, bei Stellbetätigung einer Stelleinrichtung 22, die beispielsweise als fußbetätigbares Pedal ausgebildet ist, die Werkzeugeinheit 16 aus der Ruhestellung in die Betriebsstellung abzusenken und bei Betätigung der Betätigungseinheit 15 in der Betriebsstellung zu halten. Ferner ist die Abhebevorrichtung 19 dazu ausgebildet, die Werkzeugeinheit 16 ohne Betätigung der Betätigungseinheit 15 selbsttätig in die Ruhestellung anzuheben. Zur Realisierung dieser Ausbildung weist die Abhebevorrichtung 19 bei der dargestellten Ausführungsform eine zwischen der Basisstruktur 14 und der Werkzeugeinheit 16 wirkende Federvorspanneinrichtung 18 auf, die hier beispielhaft als an der Basisstruktur und an der Werkzeugeinheit angelenkte Gasdruckfeder ausgebildet ist. Durch Absenken der Werkzeugeinheit 16 aus der Ruhestellung in die Betriebsstellung ist die Gasdruckfeder spannbar und durch Anheben aus der Betriebsstellung in die Ruhestellung entsprechend entspannbar. Zur selbsttätigen Rückstellung ist die Gasdruckfeder zum Anheben der Werkzeugeinheit 16 entgegen der Gewichtskraft aus der Betriebsstellung in die Ruhestellung ausgelegt.

Zum Halten der Werkzeugeinheit 16 in der Betriebsstellung bei Betätigung der Betätigungseinheit 15 weist die Abhebevorrichtung 19 eine zwischen der Basisstruktur 14 und der Werkzeugeinheit 17 wirkende Rückhalteeinrichtung 20 auf, welche durch die Betätigungseinheit 15 steuerbar ausgebildet ist. Bei der dargestellten Ausführungsform ist die Rückhalteeinrichtung 20 beispielhaft mit einem Elektromagneten 26 und einem ferromagnetischen Gegenstück 27 gebildet, welche in einem betätigten Zustand eine Haltekraft auf die Werkzeugeinheit 16 aufbringen, die größer als die Differenz der Federkraft der Federvorspanneinrichtung 18 in der Betriebsstellung und der Gewichtskraft der Werkzeugeinheit 16 ist. Zur Kompensation von Zerspankräften ist diese Haltekraft mit einer entsprechenden Sicherheit deutlich größer bemessen als diese Differenz. Auf diese Weise hält die Rückhalteeinrichtung 20 die Werkzeugeinheit 16 bei Betätigung der Betätigungseinheit 15 entgegen der Federvorspannung in der Betriebsstellung. Ohne Betätigung der Betätigungseinheit 15 bzw. bei Ende der Betätigung gibt die Rückhalteeinrichtung 20 die Werkzeugeinheit 16 zum Anheben in die Ruhestellung automatisch frei.

Die Abhebevorrichtung 19 weist ferner die Einstelleinrichtung 21 zur einstellbaren Begrenzung einer Frästiefe 13 auf, welche beispielhaft als Hubspindel ausgebildet ist. Diese verschiebt die Höhenposition des eines Anschlags und des Elektromagneten 26.

Die Betätigungseinheit 15 ist ebenfalls als Doppelhandgriff mit einer Zweihandschaltung ausgebildet. Daher sind an beiden Handgriffen voneinander unabhängige Betätigungselemente 23, 24 vorgesehen, wobei die Betätigungseinheit 15 zum Starten nur durch gleichzeitige Manipulation beider Betätigungselemente 23, 24 betätigbar ist. Auf diese Weise ist bei bestimmungsgemäßem Gebrauch eine Betätigung zum Start des Antriebsmotors 11 nur mit verschiedenen Händen ermöglicht, sodass eine Zweihandbedienung notwendig ist.

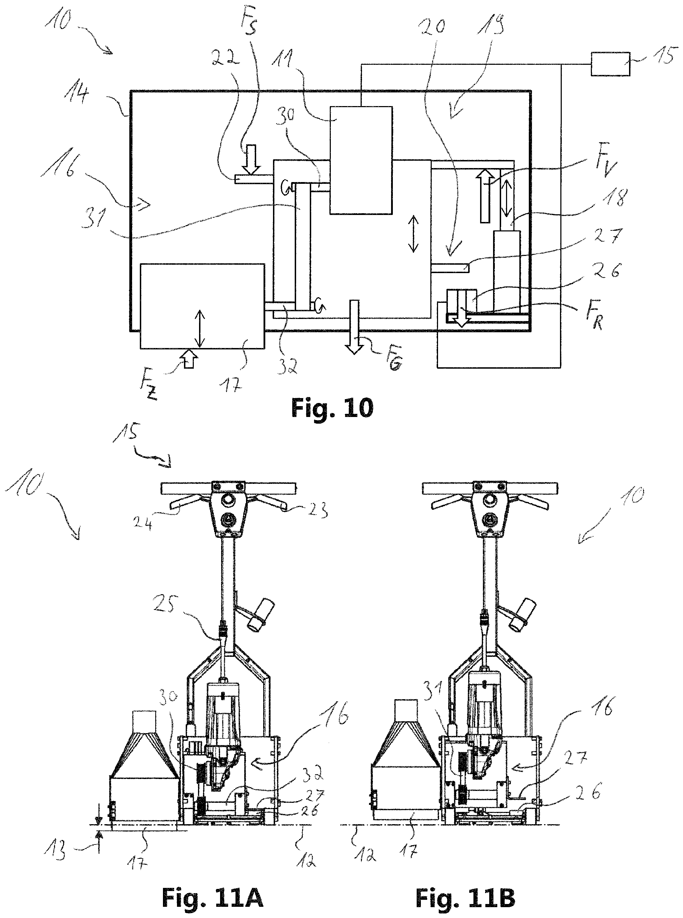

Fig. 10 zeigt ein schematisches Funktionsschaubild einer Flächenfräse 10.

Die einzelnen Funktionselemente sind hier lediglich schematisiert bzw. als Kästen symbolisiert dargestellt. An den jeweiligen Kästen sind die an dem jeweiligen Funktionselement angreifenden Kräfte mit Pfeilen symbolisiert eingezeichnet.

Die an der Werkzeugeinheit 16 durch die Erdbeschleunigung angreifende Gewichtskraft F_{G} wird durch die ebenfalls an der Werkzeugeinheit 16 angreifende Vorspannkraft F_{V} der Federvorspanneinrichtung 18 stets überkompensiert. In einer Ruhestellung, in welcher das Fräswerkzeug 17 außer Eingriff mit einem Bodenbelag 12 steht und die Stellvorrichtung 22 unbetätigt bleibt, verbleibt das Fräswerkzeug 17 somit in der Ruhestellung. Entsprechend gilt F_{V} > F_{G}.

Zum Einnehmen der Betriebsstellung wird zunächst das Betätigungselement 15 betätigt, um das Fräswerkzeug 17 anzutreiben. Bei der dargestellten Ausführungsform weist der Antriebsmotor dazu eine Ausgangswelle 30 auf, die über eine Übersetzung 31, die hier beispielsweise als Zahnriementrieb ausgebildet ist, mit einer Antriebswelle 32 des Fräswerkzeugs 17 gekoppelt ist.

Anschließend wird eine Stellkraft F_{S} auf die Verstelleinheit 22 ausgeübt. In Summe übersteigen die Stellkraft F_{S} und die Gewichtskraft F_{G} dabei die Vorspannkraft F_{V}, sodass gilt F_{V} < F_{G} + F_{S}.

Durch die Stellkraft F_{S} wird die Werkzeugeinheit 16 und damit das Fräswerkzeug entsprechend abgesenkt. Dabei kommt es mit dem Bodenbelag in Kontakt, sodass das Fräswerkzeug 17 nach oben drückende Zerspankräfte F_{Z} auf die Werkzeugeinheit 16 überträgt. Die Stellkraft F_{S} ist groß genug zur Überwindung der Zerspankräfte F_{Z} vorgesehen, sodass gilt F_{Z} + F_{V} < F_{G} + F_{S}.

Ist die Betriebsstellung erreicht und bleibt das Betätigungselement 15 weiterhin betätigt, so greift zusätzlich die durch die Rückhalteeinrichtung 20, hier beispielhaft den Elektromagneten 26 und das ferromagnetische Gegenstück 27, aufgebrachte Rückhaltekraft F_{R} an der Werkzeugeinheit 16 an. Die Stellkraft F_{S} kann sodann weggenommen bzw. auf null reduziert werden. In der Betriebsstellung wird der Bodenbelag abgefräst, sodass weiterhin Zerspankräfte F_{Z} wirken. Entsprechend gilt dann F_{Z} + F_{V} < F_{G} + F_{R}.

Wird die Betätigung der Betätigungseinrichtung 15 unterbrochen oder beendet, so wird die Rückhaltekraft F_{R} gelöst. Dadurch gerät das Fräswerkzeug 17 auch außer Eingriff mit dem Bodenbelag 12, sodass keine Zerspankräfte mehr wirken. Entsprechend gilt wieder F_{V} > F_{G}, sodass das Fräswerkzeug 17 selbsttätig in die Ruhestellung zurückgestellt wird.

Fig. 11A zeigt eine Vorderansicht einer Flächenfräse 10 in Betriebsstellung.

Die Betätigungselemente 23, 24 der Betätigungseinheit 15 sind hier betätigt. Die Werkzeugeinheit 16 ist abgesenkt und durch den Elektromagneten 26 in der Betriebsstellung gehalten, sodass das Fräswerkzeug 17 mit einer Frästiefe 13 mit dem Bodenbelag 12 in Eingriff steht.

Bei dem Fräswerkzeug kann es sich beispielsweise um eine Fräswalze 1 gemäß Fig. 1 bis 5 handeln.

Fig. 11B zeigt eine Vorderansicht einer Flächenfräse 10 in Ruhestellung.

Die Werkzeugeinheit 16 ist hier angehoben, sodass das Fräswerkzeug 17 mit dem Bodenbelag 12 außer Eingriff steht.

Mit einer solchen Flächenfräse 10 ist entsprechend ein Verfahren zur Entfernung eines verklebten Bodenbelags 12 durchführbar, wobei zunächst die Betätigungseinheit 15 zur gleichzeitigen Ansteuerung eines Antriebsmotors 11 der Werkzeugeinheit 16 und der Rückhalteeinrichtung 20 betätigt wird. Entsprechend wird mit dem Antriebsmotor 11 das Fräswerkzeug 17, also die Fräswalze 1, der Werkzeugeinheit 16 angetrieben. Sodann wird die Werkzeugeinheit 16 aus einer Ruhestellung in eine Betriebsstellung entgegen der Federkraft der Federvorspanneinrichtung 18 abgesenkt, insbesondere mittels Stellbetätigung der Stelleinrichtung 22. Dabei umfasst das Absenken der Werkzeugeinheit 16 ein Kontaktieren des Fräswerkzeugs 17 mit dem Bodenbelag 12. Bei Erreichen der Betriebsstellung wird anschließend die Werkzeugeinheit 16 mit der Rückhalteeinrichtung 20 zur Entfernung des verklebten Bodenbelags in der Betriebsstellung gehalten. Bei Lösen der Betätigungseinheit 15, insbesondere eines der beiden Betätigungselemente 23, 24, wird gleichzeitig der Antriebsmotor 11 angehalten und die Rückhalteeinrichtung 20 freigegeben. Somit folgt ein selbsttätiges Anheben der Werkzeugeinheit 16 in die Ruhestellung durch die Federkraft der Federvorspanneinrichtung 18.

Erkennbar liegt die Ruhestellung oberhalb des Bodenniveaus. Ein zwischen Ruhestellung und Betriebsstellung überwundener Hub der Abhebevorrichtung 19 ist somit stets größer als die Frästiefe 13.

Zur Anpassung an die Dicke des zu entfernenden Bodenbelags 12 wird vor dem Betätigen des Betätigungselements 15 eine vorbestimmte Frästiefe 13 eingestellt. Ist diese nach dem Kontaktieren des Fräswerkzeugs mit dem Bodenbelag 12 erreicht, wird die Werkzeugeinheit 16 auf der vorbestimmten Frästiefe 13 gehalten. Entsprechend wird die Betriebsstellung durch die vorbestimmte Frästiefe bestimmt.

Auch bei dieser Ausführungsform wird eine Stromversorgung 25 des Antriebsmotors 11 mit einer Haushalts-Steckdose verbunden. Entsprechend wird vor dem Betätigen des Betätigungselements 15 eine vorbestimmte Fräsgeschwindigkeit derart eingestellt, dass eine mit der vorbestimmten Frästiefe 13 und mit der vorbestimmten Fräsgeschwindigkeit benötigte Zerspanungsleistung kleiner als eine bei Haushalts-Netzspannung maximal zulässige Leistung des Antriebsmotors 11 ist.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Beispielsweise wäre es denkbar, die Werkzeugeinheit nicht linear sondern über eine Kinematik bzw. Übersetzung zu verstellen, um die zur Stellbetätigung notwendigen Stellkräfte zu reduzieren.

Darüber hinaus sind alternative Rückhalteeinrichtungen 20 denkbar. Beispielsweise könnte anstatt eines Elektromagneten auch ein durch Betätigung des Betätigungselements gesteuerter Sperrschieber in eine die Werkzeugeinheit arretierende Stellung gebracht werden, welcher bei lösen der Betätigung selbsttätig oder durch die Vorspannkraft in eine nicht arretierende Stellung gebracht wird.

Selbst verständlich sind hinsichtlich der Verteilung der Schneidplatten an der Fräswalze unterschiedlichste Verläufe oder Muster denkbar, solange dabei die gesamte Fräsbreite abgedeckt wird.

Zur Anpassung der Fräsgeschwindigkeit kann auch eine Steuereinrichtung oder Regeleinrichtung vorgesehen sein, die zur automatischen Anpassung der Fräsgeschwindigkeit an die Frästiefe 13 bei dieser maximal zulässigen Leistung ausgebildet ist.

### Bezugszeichenliste

- 1: Fräswalze
- 2: Fräsbreite
- 3: Schneidplatte
- 4: Mantelfläche
- 5: Breite
- 6: Lücke
- 7: Spanaufnahmevertiefung
- 8: Montageausnehmung
- 9: Walzenkörper
- 10: Flächenfräse
- 11: Antriebsmotor
- 12: Bodenbelag
- 13: Frästiefe
- 14: Basisstruktur
- 15: Betätigungseinheit
- 16: Werkzeugeinheit
- 17: Fräswerkzeug
- 18: Federvorspanneinrichtung
- 19: Abhebevorrichtung
- 20: Rückhalteeinrichtung
- 21: Einstelleinrichtung
- 22: Stelleinrichtung
- 23: Betätigungselement
- 24: Betätigungselement
- 25: Stromversorgung
- 26: Elektromagnet
- 27: ferromagnetisches Gegenstück
- 28: Stiel
- 29: Schutzabdeckung
- 30: Ausgangswelle
- 31: Übersetzung
- 32: Antriebswelle
- 33: Blockierfeder
- 34: Absaughaube
- 35: Sauganschluss

- α: Beabstandung
- β: freier Abstand

- F_{G}: Gewichtskraft
- F_{R}: Rückhaltekraft
- F_{S}: Stellkraft
- F_{V}: Vorspannkraft
- F_{Z}: Zerspankräfte

## Patentansprüche

1. Fräswalze (1) zur Entfernung von verklebten Bodenbelägen, insbesondere Parkettbodenbelägen,
mit einer vorbestimmten Fräsbreite (2), welche die Breite eines mit einer Überfahrt der Fräswalze (1) bearbeitbaren Bodenflächenabschnitts vorgibt,
mit einer Vielzahl von im Wesentlichen tangential mit einer Winkelabweichung kleiner als 10° zu einer Mantelfläche (4) der Fräswalze an der Fräswalze angeordneten Schneidplatten (3), die an der Fräswalze (1) verteilt angeordnet sind, so dass bei einer vollständigen Umdrehung der Fräswalze (1) die gesamte Fräsbreite (2) durch die Schneidplatten (3) bearbeitbar ist und eine mit dem zu bearbeitenden Bodenflächenabschnitt gleichzeitig kontaktierbare gemeinsame Breite der Schneidplatten (3) stets kleiner als die Fräsbreite (2) ist, wobei die Schneidplatten (3) in Umfangsrichtung voneinander beabstandet sind, so dass mit dem zu bearbeitenden Bodenflächenabschnitt stets nur eine Schneidplatte (3) gleichzeitig kontaktierbar ist,
wobei die Schneidplatten (3) axial und radial gleichmäßig an der gemeinsamen Mantelfläche (4) der Fräswalze verteilt angeordnet sind, so dass zwischen zwei benachbarten Schneidplatten (3) in axialer Richtung eine Lücke (6) mit einem axialen Versatz um etwa eine Schneidplattenbreite vorgesehen ist und wobei
bei einer vollständigen Umdrehung die gesamte Fräsbreite (2) gleichmäßig mit den Schneidplatten (3) bearbeitbar ist, welche jeweils deutlich schmaler als die Fräsbreite ausgebildet sind, und
dass eine Staffelung der Schneidplatten (3) in zwei Reihen über den Umfang der Fräswalze verteilt vorgesehen ist, deren zweite Reihe die Bereiche der Lücken (6) zwischen den Schneidplatten (3) der ersten Reihe bei einer ganzen Umdrehung der Fräswalze (1) bearbeitet.

2. Fräswalze nach Anspruch 1, wobei die Schneidplatten (3) spiralförmig an der Mantelfläche (4) verteilt angeordnet sind.

3. Fräswalze nach einem der vorangehenden Ansprüche, wobei die Schneidplatten (3) als Wendeschneidplatten ausgebildet sind.

4. Fräswalze nach einem der vorangehenden Ansprüche, wobei die Schneidplatten (3) unabhängig voneinander an der Fräswalze (1), insbesondere an der Mantelfläche (4) der Fräswalze (1), befestigbar sind.

5. Fräswalze nach einem der vorangehenden Ansprüche, wobei die Fräsbreite (2) in einem Bereich von 100 mm bis 500 mm, insbesondere 100 mm bis 300 mm, vorzugsweise 150 mm bis 250 mm liegt.

6. Fräswalze nach einem der vorangehenden Ansprüche, wobei die Breite einer Schneidplatte (3) im Bereich von 10 mm bis 50 mm, insbesondere 10 mm bis 30 mm, vorzugsweise 15 mm bis 25 mm, liegt.

7. Fräswalze nach einem der vorangehenden Ansprüche, wobei die Schneidplatten (3) untereinander eine axiale Überlappung geringer als eine halbe Breite einer Schneidplatte (3), vorzugsweise geringer als ein Zehntel der Breite einer Schneidplatte (3), besonders bevorzugt kleiner als 2 mm, aufweisen, wobei die axiale Überlappung zwischen den Schneidplatten (3) der ersten und zweiten Reihe vorgesehen ist.

8. Flächenfräse (10) zur Entfernung von verklebten Bodenbelägen, insbesondere Parkettfräse zur Entfernung von verklebten Parkettbodenbelägen,
mit einem Antriebsmotor (11), und
mit einer durch den Antriebsmotor (11) antreibbaren Fräswalze (1) nach einem der vorangehenden Ansprüche.

9. Flächenfräse nach Anspruch 8, wobei der Antriebsmotor (11) eine vorbestimmte mechanische Antriebsleistung aufweist, wobei die einzelnen Schneidplatten (3) zur Abtrennung eines vorbestimmten Bodenbelags, insbesondere von Parkettboden, mit einer vorbestimmten maximalen Zerspanungsleistung ausgelegt sind, die unter der vorbestimmten Antriebsleistung liegt.

10. Flächenfräse nach Anspruch 9, wobei die Flächenfräse (10) eine vorbestimmte maximale Frästiefe aufweist und die einzelnen Schneidplatten (3) jeweils zur Abtrennung des vorbestimmten Bodenbelags bei maximaler Frästiefe mit der vorbestimmten maximalen Zerspanungsleistung ausgelegt sind.

11. Flächenfräse nach Anspruch 10, wobei die maximale Frästiefe in einem Bereich von 3 mm bis 30 mm, insbesondere 5 mm bis 30 mm, vorzugsweise 10 mm bis 30 mm, besonders bevorzugt 15 mm bis 25 mm, liegt.

12. Flächenfräse nach einem der Ansprüche 9 bis 11, wobei die vorbestimmte Antriebsleistung geringer als eine bei Netzspannung maximal zulässige Aufnahmeleistung, insbesondere von 3680 W, vorgesehen ist.

13. Verfahren zur Entfernung eines Bodenbelags, insbesondere mit einer Flächenfräse (10) nach einem der Ansprüche 8 bis 12, mit den Schritten:
Antreiben einer Fräswalze (1) nach einem der Ansprüche 1 bis 8, die eine Mehrzahl um den Umfang der Fräswalze (1) verteilter tangential zu der Mantelfläche (4) der Fräswalze orientierter Schneidplatten (3) aufweist, welche jeweils eine im Vergleich zu einer Fräsbreite (2) der Fräswalze (1) geringere Breite aufweisen, mit einer vorbestimmten Antriebsleistung;
Kontaktieren der Fräswalze (1) mit dem Bodenbelag (12), wobei stets nur eine der Schneidplatten (3) der Fräswalze (1) den zu bearbeitenden Bodenflächenabschnitt gleichzeitig kontaktiert; und
Einstellen einer den Bodenbelag durchdringenden Frästiefe (13) und einer Fräsgeschwindigkeit derart, dass eine Zerspanungsleistung kleiner oder gleich der vorbestimmten Antriebsleistung ist.

## Claims

1. Milling drum (1) for removing glued floor coverings, in particular parquet floor coverings,
having a predetermined milling width (2) which specifies the width of a floor surface portion worked in one pass of the milling drum (1),
comprising a plurality of cutting inserts (3), which are arranged on the milling drum substantially tangentially, at an angular deviation of less than 10°, to an outer surface (4) of the milling drum, and which are distributed on the milling drum (1) in such a way that in a complete rotation of the milling drum (1) the entire milling width (2) can be worked by the cutting inserts (3) and a width of the cutting inserts (3) which is able to be brought into contact with the floor surface portion simultaneously is always less than the milling width (2),
wherein the cutting inserts (3) are mutually spaced apart in the circumferential direction in such a way that only one cutting insert (3) can ever be brought into contact simultaneously with the floor surface portion to be worked, wherein the cutting inserts (3) are arranged distributed axially and radially uniformly on the shared outer surface (4) of the milling drum, in such a way that there is a gap (6), having an axial offset of approximately one cutting insert width, between two adjacent cutting inserts (3) in the axial direction, and
wherein in a complete rotation the entire milling width (2) can be worked uniformly using the cutting inserts (3), which are each formed considerably narrower than the milling width, and
wherein the cutting inserts (3) are staggered distributed in two rows over the circumference of the milling drum, the second row thereof working the regions of the gaps (6) between the cutting inserts (3) of the first row in a complete rotation of the milling drum (1).

2. Milling drum according to claim 1, wherein the cutting inserts (3) are arranged distributed helically on the outer surface (4).

3. Milling drum according to either of the preceding claims, wherein the cutting inserts (3) are formed as indexable cutting inserts.

4. Milling drum according to any of the preceding claims, wherein the cutting inserts (3) can be fixed to the milling drum (1), in particular to the outer surface (4) of the milling drum (1), mutually independently.

5. Milling drum according to any of the preceding claims, wherein the milling width (2) is in a range of 100 mm to 500 mm, in particular 100 mm to 300 mm, preferably 150 mm to 250 mm.

6. Milling drum according to any of the preceding claims, wherein the width of a cutting insert (3) is in the range of 10 mm to 50 mm, in particular 10 mm to 30 mm, preferably 15 mm to 25 mm.

7. Milling drum according to any of the preceding claims, wherein the cutting inserts (3) have a mutual axial overlap less than half of a width of a cutting insert (3), preferably less than a tenth of the width of a cutting insert (3), particularly preferably less than 2 mm, the axial overlap being provided between the cutting inserts (3) of the first and the second row.

8. Surface mill (10) for removing glued floor coverings, in particular a parquet mill for removing glued parquet floor coverings,
comprising a drive motor (11) and
comprising a milling drum (1) according to any of the preceding claims which can be driven by the drive motor (11) .

9. Surface mill according to claim 8, wherein the drive motor (11) has a predetermined mechanical drive power, the individual cutting inserts (3) being configured with a predetermined maximum cutting power, which is less than the predetermined drive power, for separating off a predetermined floor cover, in particular from parquet floor.

10. Surface mill according to claim 9, wherein the surface mill (10) has a predetermined maximum milling depth and the individual cutting inserts (3) are each configured with the predetermined maximum cutting power for separating off the predetermined floor covering.

11. Surface mill according to claim 10, wherein the maximum cutting depth is in a range of 3 mm to 30 mm, in particular 5 mm to 30 mm, preferably 10 mm to 30 mm, particularly preferably 15 mm to 25 mm.

12. Surface mill according to any of claims 9 to 11, wherein the predetermined drive power is provided to be less than a maximum admissible input power, in particular of 3680 W, at mains voltage.

13. Method for removing a floor covering, in particular using a surface mill (10) according to any of claims 8 to 12, comprising the steps of:
driving a milling drum (1) according to any of claims 1 to 8, having a plurality of cutting inserts (3) which are distributed around the circumference of the milling drum (1) and orientated tangential to the outer surface (4) of the milling drum and which are each of a width less than a milling width (2) of the milling drum (1), at a predetermined drive power;
bringing the milling drum (1) into contact with the floor covering (12), only one of the cutting inserts (3) of the milling drum (1) ever being in contact simultaneously with the floor surface portion to be worked; and
adjusting a milling depth (13) through the floor covering and a milling speed in such a way that a cutting power is less than or equal to the predetermined drive power.

## Revendications

1. Rouleau de fraisage (1) pour l'enlèvement de revêtements de sol collés, en particulier de revêtements de sol en parquet,
avec une largeur de fraisage (2) prédéterminée, qui définit la largeur d'une section de surface de sol pouvant être traitée par un passage du rouleau de fraisage (1),
avec une pluralité de plaquettes de coupe (3) disposées sur le rouleau de fraisage sensiblement tangentiellement avec un écart angulaire inférieur à 10° par rapport à une surface extérieure (4) du rouleau de fraisage, qui sont réparties sur le rouleau de fraisage (1) de telle sorte que, lors d'une rotation complète du rouleau de fraisage (1), toute la largeur de fraisage (2) peut être traitée par les plaquettes de coupe (3) et qu'une largeur commune des plaquettes de coupe (3) pouvant être mise en contact simultanément avec la section de surface de sol à traiter est toujours inférieure à la largeur de fraisage (2),
dans lequel les plaquettes de coupe (3) sont espacées les unes des autres dans la direction circonférentielle de telle sorte qu'une seule plaquette de coupe (3) peut toujours être mise en contact simultanément avec la section de surface de sol à traiter,
dans lequel les plaquettes de coupe (3) sont réparties axialement et radialement de manière uniforme sur la surface extérieure commune (4) du rouleau de fraisage de telle sorte qu'entre deux plaquettes de coupe (3) adjacentes, il est prévu dans la direction axiale un espace (6) avec un décalage axial d'environ une largeur de plaquette de coupe, et dans lequel, lors d'une rotation complète, toute la largeur de fraisage (2) peut être traitée uniformément avec les plaquettes de coupe (3), qui sont réalisées chacune nettement plus étroites que la largeur de fraisage, et
dans lequel il est prévu un échelonnement des plaquettes de coupe (3) réparties en deux rangées sur la circonférence du rouleau de fraisage, dont la deuxième rangée traite les zones des espaces (6) entre les plaquettes de coupe (3) de la première rangée lors d'une rotation complète du rouleau de fraisage (1).

2. Rouleau de fraisage selon la revendication 1, dans lequel les plaquettes de coupe (3) sont réparties en spirale sur la surface extérieure (4).

3. Rouleau de fraisage selon l'une des revendications précédentes, dans lequel les plaquettes de coupe (3) sont réalisées sous la forme de plaquettes de coupe réversibles.

4. Rouleau de fraisage selon l'une des revendications précédentes, dans lequel les plaquettes de coupe (3) peuvent être fixées indépendamment les unes des autres sur le rouleau de fraisage (1), en particulier sur la surface extérieure (4) du rouleau de fraisage (1).

5. Rouleau de fraisage selon l'une des revendications précédentes, dans lequel la largeur de fraisage (2) se situe dans une plage de 100 mm à 500 mm, en particulier de 100 mm à 300 mm, de préférence de 150 mm à 250 mm.

6. Rouleau de fraisage selon l'une des revendications précédentes, dans lequel la largeur d'une plaquette de coupe (3) se situe dans une plage de 10 mm à 50 mm, en particulier de 10 mm à 30 mm, de préférence de 15 mm à 25 mm.

7. Rouleau de fraisage selon l'une des revendications précédentes, dans lequel les plaquettes de coupe (3) présentent entre elles un chevauchement axial inférieur à une demi-largeur d'une plaquette de coupe (3), de préférence inférieur au dixième de la largeur d'une plaquette de coupe (3), de manière particulièrement préférée inférieur à 2 mm, dans lequel le chevauchement axial est prévu entre les plaquettes de coupe (3) de la première et de la deuxième rangée.

8. Fraiseuse de surface (10) pour l'enlèvement de revêtements de sol collés, en particulier fraiseuse à parquet pour l'enlèvement de revêtements de sol collés en parquet,
avec un moteur d'entraînement (11), et
avec un rouleau de fraisage (1) selon l'une des revendications précédentes pouvant être entraîné par le moteur d'entraînement (11).

9. Fraiseuse de surface selon la revendication 8, dans laquelle le moteur d'entraînement (11) présente une puissance d'entraînement mécanique prédéterminée, dans laquelle les différentes plaquettes de coupe (3) sont conçues pour décaper un revêtement de sol prédéterminé, en particulier du parquet, avec une puissance d'enlèvement de copeaux maximale prédéterminée qui est inférieure à la puissance d'entraînement prédéterminée.

10. Fraiseuse de surface selon la revendication 9, dans laquelle la fraiseuse de surface (10) présente une profondeur de fraisage maximale prédéterminée et les différentes plaquettes de coupe (3) sont conçues chacune pour décaper le revêtement de sol prédéterminé à la profondeur de fraisage maximale à la puissance d'enlèvement de copeaux maximale prédéterminée.

11. Fraiseuse de surface selon la revendication 10, dans laquelle la profondeur de fraisage maximale se situe dans une plage de 3 mm à 30 mm, en particulier de 5 mm à 30 mm, de préférence de 10 mm à 30 mm, de manière particulièrement préférée de 15 mm à 25 mm.

12. Fraiseuse de surface selon l'une des revendications 9 à 11, dans laquelle la puissance d'entraînement prédéterminée est prévue inférieure à une puissance absorbée maximale autorisée à la tension du réseau, en particulier de 3680 W.

13. Procédé d'enlèvement d'un revêtement de sol, en particulier avec une fraiseuse de surface (10) selon l'une des revendications 8 à 12, comprenant les étapes consistant à :
entraîner un rouleau de fraisage (1) selon l'une des revendications 1 à 8, qui présente une pluralité de plaquettes de coupe (3) réparties autour de la circonférence du rouleau de fraisage (1) et orientées tangentiellement à la surface extérieure (4) du rouleau de fraisage, qui présentent chacune une largeur inférieure à une largeur de fraisage (2) du rouleau de fraisage (1), avec une puissance d'entraînement prédéterminée ;
mettre en contact le rouleau de fraisage (1) avec le revêtement de sol (12), dans lequel une seule des plaquettes de coupe (3) du rouleau de fraisage (1) est toujours en contact avec la section de surface de sol à traiter ; et
régler une profondeur de fraisage (13) pénétrant le revêtement de sol et une vitesse de fraisage de telle sorte qu'une puissance d'enlèvement de copeaux soit inférieure ou égale à la puissance d'entraînement prédéterminée.
